# EUROPÄISCHE PATENTANMELDUNG

(11) **EP 4 438 811 A1**
(43) Veröffentlichungstag der Anmeldung: **02.10.2024**
(21) Anmeldenummer: 23164331.3
(22) Anmeldetag: 27.03.2023
(51) Int. Cl.: E01C 19/48, B60H 1/00, G05G 1/01

(54) **STRASSENFERTIGER ODER BESCHICKERFAHRZEUG MIT EINEM FRISCHLUFTSYSTEM**

(71) Anmelder: Joseph Vögele AG, 67067 Ludwigshafen (DE)
(72) Erfinder: Erdtmann, Bernhard, 68535 Edingen Neckarhausen (DE); Weber, Stefan, 67127 Rödersheim-Gronau (DE); Pontius, Johannes, 66839 Schmelz (DE); Riffel, Jan, 68307 Mannheim (DE); Kempf, Felix, 68163 Mannheim (DE)
(74) Vertreter: Grünecker Patent- und Rechtsanwälte PartG mbB

(57) **Zusammenfassung**

Die Erfindung bezieht sich auf eine Straßenbaumaschine (1, 20) die in Form eines Straßenfertigers (2) oder eines Beschickerfahrzeugs (21) für einen Straßenfertiger (2) vorliegt, umfassend mindestens einen Bedienstand (9, 17) mit wenigstens einer offen ausgebildeten Seite (S), wobei der Bedienstand (9, 17) eine Bedienkonsole (K, K', K") zum Steuern und Überwachen von mittels der Straßenbaumaschine (1, 20) durchführbaren Prozessen sowie ein Frischluftsystem (35) mit mindestens einer Frischluftöffnung (36, 54, 61) umfasst, wobei das Frischluftsystem (35) vollständig in der Bedienkonsole (K, K', K") integriert ist. Ferner betrifft die Erfindung die Verwendung einer Bedienkonsole (K, K', K") zur Frischlufterzeugung und Frischluftversorgung an einer Stra-ßenbaumaschine (1, 20).

## Beschreibung

Die vorliegende Erfindung bezieht sich auf eine Straßenbaumaschine gemäß Anspruch 1 und betrifft des Weiteren die Verwendung einer Frischlufteinrichtung gemäß Anspruch 16.

Herkömmlicherweise werden in geschlossenen Fahrzeugkabinen Frischluftsysteme verwendet, um von außerhalb der Fahrzeugkabine angesaugte Luft zu filtern und die gefilterte Luft innerhalb der nach außen hin abgrenzten Fahrzeugkabine für darin positionierte Insassen als Frischluft zur Verfügung zu stellen. EP 3 463 947 B1 und US 6,290,286 B1 offenbaren Baggerfahrzeuge mit geschlossenen Fahrerkabinen, in denen Frischluftsysteme verbaut sind.

DE 10 2020 123 723 A1 offenbart einen Straßenfertiger mit einer im Dach des Fahrerbedienstands integrierten Luftdüseneinheit, um einen Luftschleier um den Bedienstand zu erzeugen. Alternativ dazu wird ein mittels der Luftdüseneinheit erzeugter Luftschleier vor der Einbaubohle zum Bedecken des dort vorliegenden Schneckenraums eingesetzt, damit sich die im Schneckenraum durch die Querverteilung des Einbaumaterials entstehenden Dämpfe besser absaugen lassen. Das Prinzip der Luftschleier-Abschottung des Fahrerbedienstands sowie das Prinzip der Luftschleier-Einhausung des Schneckenraums vor der Einbaubohle tragen dazu bei, dass Dämpfe nicht auf den Fahrerbedienstand sowie in den Außenbedienstand des Straßenfertigers gelangen.

Nichtsdestotrotz sind die dafür eingesetzten Luftdüsensysteme in deren Bauweise kostenintensiv und lassen sich nicht ohne Weiteres als standardisierte Einheiten an verschiedenen Straßenfertigertypen einsetzen, da an unterschiedlichen Fertigertypen daran gebildete Dachaufbauten unterschiedlich groß sind und sich deren Arbeitsbreiten ebenfalls voneinander unterscheiden können. Außerdem tendieren die Luftdüseneinheiten zu einer erhöhten Geräuschentwicklung am Arbeitsplatz des Fahrers bzw. Bohlenbedieners.

Aufgabe der Erfindung ist es, die Arbeitsbedingungen an einem Straßenfertiger bzw. an einem Beschickerfahrzeug für einen Straßenfertiger mittels bzw. unter Verwendung einfacher kostengünstiger Mittel im Hinblick auf eine verbesserte Luftqualität zu verbessem.

Diese Aufgabe wird gelöst mittels eines Straßenfertigers oder eines Beschickerfahrzeugs gemäß Anspruch 1. Ferner wird die Aufgabe gelöst durch die Verwendung einer Frischluftversorgung gemäß Anspruch 16.

Die Erfindung betrifft eine Straßenbaumaschine, die in Form eines Straßenfertigers oder eines Beschickerfahrzeugs für einen Straßenfertiger vorliegt. Die erfindungsgemäße Straßenbaumaschine umfasst mindestens einen Bedienstand mit wenigstens einer offen ausgebildeten Seite. Folglich liegt an der erfindungsgemäßen Straßenbaumaschine der Bedienstand nicht als geschlossene Fahrzeugkabine vor. Der erfindungsgemäße Bedienstand umfasst mindestens eine Bedienkonsole zum Steuern und Überwachen von mittels der Straßenbaumaschine durchführbaren Prozessen sowie ein Frischluftsystem mit mindestens einer Frischluftöffnung. Erfindungsgemäß ist das Frischluftsystem vollständig in der Bedienkonsole integriert.

Bei der Erfindung kann daher der ohnehin von der Umgebungsluft durchlüftete Bereich des offen gebildeten Bedienstands zusätzlich mit Frischluft versorgt werden, wodurch sich insgesamt die Luftqualität unmittelbar an der Bedienkonsole für einen dort positionierten Fahrer bzw. Bediener verbessern lässt. Indem die Bedienkonsole selbst als Frischlufterzeuger zum Einsatz kommt, lassen sich in der Luft enthaltene Dämpfe und/oder Aerosole im Bereich des offen gebildeten Bedienstands auf ein zulässiges, für den Fahrer bzw. Bediener als nicht gesundheitsgefährdend erachtetes Niveau reduzieren.

Die dafür getätigte Frischlufterzeugung sowie -ausgabe findet unmittelbar über die Bedienkonsole des Bedienstands statt. Somit ist die Frischlufteinrichtung komplett, d.h. baulich und auch funktional, in der Bedienkonsole integriert. Das Frischluftsystem wird somit vom Personal nicht als eigenständiges Modul am Bedienstand, sondern als integraler Bestandteil der daran vorgesehenen Bedienkonsole wahrgenommen und wird vom Personal deshalb auch zuverlässiger genutzt.

Dadurch, dass das Frischluftsystem in der Bedienkonsole integriert ist, lässt sich die Bedienkonsole in dieser Form als multifunktionales Standardmodul an unterschiedlichen Straßenfertigersowie Beschickertypen einsetzen, ist vor allem konstruktiv nicht von typenspezifischen, unterschiedlichen Bauweisen abhängig. Durch die integrierte Bauweise ergibt sich ein wesentlicher Kostenvorteil gegenüber separaten Einrichtungen, die noch dazu am Bedienstand Stolperfallen sein können.

Indem das Frischluftsystem vollständig in der Bedienkonsole integriert ist, weisen diese Module zusammen am Straßenfertiger bzw. Beschicker einen kompakten Aufbau auf.

Der Betrieb des in der Bedienkonsole integrierten Frischluftsystems ist geräuscharm und aufgrund kurzer Luftleitungen energieeffizient. Außerdem gibt es dank der integralen Bauweise keine losen Teile, die ggf. herumliegen und den Betrieb beeinträchtigen. Vielmehr ergibt sich durch das Integrieren des Frischluftsystems in der Bedienkonsole ein aufgeräumter und übersichtlicher Arbeitsplatz, was sich vorteilhaft auf den Maschinenbetrieb auswirkt. Von Vorteil ist auch, dass durch die integrierte Bauweise die Sicht des Fahrers bzw. des Bedieners weniger eingeschränkt ist.

Die Bedienkonsole bildet zur Aufnahme des Frischluftsystems ein geeignetes Modul aus, ohne dass dafür am Bedienstand spürbar mehr Platz beansprucht wird. Insbesondere kann eine ohnehin an der Bedienkonsole genutzte Bedienoberfläche gut zur frontalen Frischluftversorgung genutzt werden.

Durch den in der Bedienkonsole integrierten Verbau des kompletten Frischluftsystems kann auch am Bedienstand eine potenzielle Oberfläche für Verunreinigungen bzw. Ablagerungen reduziert werden, da Luftleitungen und Frischluftöffnungen des Frischluftsystems in der Bedienkonsole integriert sind, sprich damit keine von der Bedienkonsole gesonderte, verschmutzbare Bauteile vorliegen. Reinigungsintervalle des Bedienstands brauchen daher seltener durchgeführt werden.

Des Weiteren bietet die direkt aus der Bedienkonsole zur Verfügung gestellte Frischluftversorgung auch eine Schutzfunktion für die Bedienkonsole, insbesondere daran zur Ansteuerung der Straßenbaumaschine eingesetzter Bedieneinheiten, weil die direkt an der Bedienkonsole ausgegebene Frischluft auch eine gewisse Schutzatmosphäre an der Bedienkonsole, insbesondere an einem daran ausgebildeten Bedienpult, erzeugt, insbesondere einen Sauberhaltungseffekt für die Bedienoberfläche des Bedienpults bewirkt. Die direkte Frischluftausgabe an der Bedienkonsole sorgt somit sowohl für eine verbesserte Luftqualität für den an der Bedienkonsole arbeitenden Bediener als auch für einen luftraumverbesserten Einsatzbereich für die Bedienkonsole, sodass die Bedienkonsole in dieser frischluftangereicherten Atmosphäre über längere Zeit sauber gehalten werden kann, mithin zuverlässiger einsatzfähig bleibt.

Eine besondere Variante sieht vor, dass die Bedienkonsole ein Bedienpult mit einer Bedienoberfläche zum Steuern und Überwachen von mittels der Straßenbaumaschine durchführbaren Prozessen sowie einen Bedienpultträger als Unterbau für das Bedienpult aufweist, wobei das Frischluftsystem zumindest teilweise im Bedienpult und/oder zumindest teilweise im Bedienpultträger integriert ist. Das Bedienpult und/oder der Bedienpultträger für das Bedienpult liegen damit in kompakter Bauweise als Frischluftmodule vor. Der Bedienpultträger liegt für das Bedienpult insbesondere als Unterbau bzw. Fuß vor, worauf das Bedienpult befestigt ist. Ein solcher Bedienpultträger kann insbesondere an einem Konsolenschlitten bzw. an einer Konsolenführung gelagert sein, um das Bedienpult auf dem Bedienstand verstellen zu können.

Vorzugsweise ist eine Ansteuerung des Frischluftsystems mittels mindestens einer im Bedienpult und/oder im Bedienpultträger integrierten Bedieneinheit ausführbar. Damit ist die Bedienung des Frischluftsystems in die Bedienoberfläche des Bedienpults und/oder im Bedienpultträger integriert. Denkbar wäre es, dass in der Bedienoberfläche des Bedienpults und/oder im Bedienpultträger beispielsweise ein Drehregler zum Einstellen einer Frischluftversorgungsleistung vorgesehen ist.

Eine Variante sieht vor, dass das Bedienpult mindestens ein Touch-Display aufweist, das zur Ansteuerung des Frischluftsystems konfiguriert ist. Das Touch-Display ist insbesondere ein Bestandteil einer in der Bedienoberfläche des Bedienpults zum Steuern und Überwachen von mittels der Straßenbaumaschine durchführbaren Prozessen vorgesehenen Bedieneinheit, beispielsweise integraler Bestandteil eines zum Bedienpult gehörigen, daran herausnehmbar gelagerten Tabletcomputers. Die Bedieneinheit, insbesondere der Tabletcomputer, kann dazu ausgebildet sein, eine Frischluftversorgungsleistung durch das Frischluftsystem hinsichtlich einer am Bedienstand vorliegenden, erfassten atmosphärischen Bedingung, insbesondere einer daran vorliegenden Luftqualität, automatisch anzupassen.

Insbesondere ist in der Bedienoberfläche und/oder in einer durch den Bedienpultträger gebildeten Oberfläche wenigstens eine Frischluftöffnung ausgebildet, beispielsweise in einer daran ausgebildeten Verkleidung. Vorzugsweise ist der Bedienpultträger fest mit dem Bedienpult verbunden und somit stets auf den Bediener ausgerichtet, sodass der Bediener unabhängig davon, ob die Frischluft aus dem Bedienpult und/oder aus dem darunter positionierten Bedienpultträger ausströmt, frontal mit Frischluft versorgt werden kann.

Vorzugsweise sind mehrere Frischluftöffnungen in der Bedienoberfläche des Bedienpults und/oder in einer durch den Bedienpultträger gebildeten Oberfläche vorgesehen, beispielsweise in einer daran ausgebildeten Verkleidung. Diese ermöglichen es, dass Frischluft frontal an verschiedenen Stellen des Bedienpults aus der daran geschaffenen Bedienoberfläche und/oder an verschiedenen Stellen aus dem Bedienpultträger heraus austreten kann. Die Frischluftöffnungen nehmen am Bedienpult einen Teil der Bedienoberfläche ein, sprich sind direkt in der Bedienoberfläche integriert und erzeugen somit unmittelbar aus der Bedienoberfläche heraus mehrere Frischluftströme. Diese können derart über die Bedienoberfläche verteilt sein, dass sich die durch Frischluft angereichte Atmosphäre über einen wesentlichen Bereich der Bedienoberfläche erstreckt.

Die Frischluftöffnungen können beliebig auf der Bedienoberfläche des Bedienpults und/oder am Bedienpultträger verteilt sein. Eine bevorzugte Variante sieht vor, dass die Frischluftöffnungen gleichmäßig über die Bedienoberfläche verteilt sind. Die Frischluftversorgung ist damit noch besser über die gesamte Bedienoberfläche gewährleistet. Vor allem bei breit ausgebildeten Bedienpulten kann damit eine über die Breite gleichmäßig verteilte Frischluftversorgung erzeugt werden.

Denkbar wäre es, dass mehrere Gruppen aus Frischluftöffnungen in der Bedienoberfläche ausgebildet sind, wobei sich die gruppierten Frischluftöffnungen insbesondere jeweils entlang seitlicher Randbereiche der Bedienoberfläche befinden. In diesen seitlichen Randbereichen können die darin gebildeten Frischluftströme als Frischluftwände zusammenwirken, d.h. direkt am Bedienpult einen Abschottungseffekt gegen von außen kommende Dämpfe und/oder Aerosole bewirken. Außerdem können in der Bedienoberfläche des Bedienpults zwischen den in den Randbereichen gruppierten Frischluftöffnungen weitere Frischluftöffnungen vorgesehen sein, um zwischen den seitlichen Frischluftschleiern eine ausreichende Frischluftversorgung zu ermöglichen.

Vorzugsweise sind in der Bedienoberfläche mindestens eine Reihe aus quer zur Fahrtrichtung und/oder mindestens eine Reihe aus entlang der Fahrtrichtung der Straßenbaumaschine angeordneten Frischluftöffnungen ausgebildet. Die innerhalb der Bedienoberfläche in Reihen angeordneten Frischluftöffnungen können die Bedienoberfläche in funktionale Bereiche unterteilen, sorgen daher für eine funktional strukturierte, aufgeräumte Bedienoberfläche, welche sich gut vom Bediener bzw. Fahrer bedienen lässt. Außerdem führen die in Reihen angeordneten Frischluftöffnungen zu einer unwesentlich vergrößerten Bedienoberfläche, mithin zu einer kompakten Bauweise des Bedienpults als Frischlufterzeuger. Eine Reihe aus quer über die Bedienoberfläche gebildeten Frischluftöffnungen kann am Bedienpult oben, in der Mitte oder unten entlang der Bedienoberfläche vorliegen. Denkbar wären auch mehrere Querreihen aus Frischluftöffnungen.

Eine Variante sieht vor, dass in der Bedienoberfläche mehrere Bedienfelder vorliegen, wobei mindestens eine Frischluftöffnung zwischen den Bedienfeldern positioniert ist. Damit lässt sich zwischen den Bedienfeldern aus der Bedienoberfläche heraus eine frontale Frischluftversorgung für den Bediener bzw. Fahrer bilden.

Gemäß einer Ausführungsform der Erfindung sind in der Bedienoberfläche insgesamt drei oder vier Bedienfelder ausgebildet. Bei diesen Varianten kann eines der Bedienfelder als Touch-Display konfiguriert sein, welches insbesondere zur Ansteuerung des Frischluftsystems ausgebildet ist. Gemäß einer Ausführungsform können mindestens zwei aus jeweils mehreren Frischluftöffnungen gebildete Gruppen zwischen benachbarten Bedienfeldern positioniert sein. Damit ist es möglich, dass sich Frischluftströmungen aus der Bedienoberfläche an jedem Bedienfeld angrenzend bilden lassen, so dass der Bediener bzw. Fahrer im gesamten Bereich des Bedienpults von einer frontalen Frischluftversorgung profitiert. Ausführungsgemäß können in jeder Gruppe jeweils zwei oder drei Frischluftöffnungen enthalten sein.

Die benachbarten Bedienfelder können mit bestimmten Bedieneinheiten ausgestattet sein. Eine Variante sieht vor, dass in einem der Bedienfelder die Bedieneinheit vorliegt, anhand welcher sich sämtliche Funktionen des Frischluftsystems einstellen lassen, beispielsweise das an voriger Stelle genannte Touch-Display.

Die Bedienfelder sind am Bedienpult insbesondere in einem 2x2 Format derart unterteilt angeordnet, dass zwischen den Bedienfeldern Zonen freigelassen sind, in denen die Frischluftöffnungen ausgebildet sein können. Da zwischen den Bedienfeldern zum Bilden der unterteilten Anordnung freie Bereiche konstruktiv nötig sind, wird durch Integration der Frischluftöffnungen in diesen Bereichen die Bedienoberfläche insgesamt nicht wesentlich vergrößert.

Gemäß einer Ausführungsform ist das im Bedienpult integrierte Frischluftsystem sowohl für eine frontale Frischluftversorgung des Bedieners bzw. Fahrers als auch für eine laterale Frischluftversorgung konfiguriert. Durch die frontale Frischluftversorgung ist die Frischluftströmung in Richtung des Bedieners bzw. Fahrers gerichtet. Die lateral gebildete Frischluftversorgung ist dagegen vom Bedienpult aus seitwärtsgerichtet. Die frontale und laterale Frischluftversorgung können gemeinsam die am und um das Bedienpult durch Frischluft angereicherte Atmosphäre erweitern.

Vorstellbar wäre es, dass zum Bilden der lateralen Frischluftversorgung an der Bedienoberfläche außen angrenzende Bereiche des Bedienpults weitere Frischluftöffnungen aufweisen. Die aus diesen Bereichen seitwärts von der Bedienoberfläche wegführenden Frischluftströme können zumindest bereichsweise um die Bedienoberfläche herum eine Luftbarriere bilden, um zu verhindern, dass Dämpfe von der Rückseite des Bedienpults in den Bedienerbereich steigen. Die lateral von der Bedienoberfläche weggerichteten Frischluftströme können derart intensiv sein, dass auf der Bedienoberfläche eine Sogwirkung bzw. über die Bedienoberfläche zumindest bereichsweise ein Unterdruck erzeugbar ist, um darauf angesammelte Luft abzusaugen. Dieser Saugeffekt kann dadurch verstärkt werden, dass die dafür eingesetzten Frischluftöffnungen als Düsen, insbesondere Flachdüsen, außen am Bedienpult ausgebildet sind.

Vorzugsweise weisen das Bedienpult ein Gehäuse und das Frischluftsystem mindestens einen in dem Gehäuse gelagerten Ventilator auf. Der Ventilator kann als Radialventilator oder als Axialventilator vorliegen. Indem der Ventilator des Frischluftsystems im Gehäuse des Bedienpults unterbracht ist, können aufgrund der integralen Bauweise insgesamt Herstellungskosten reduziert werden. Der Ventilator kann insbesondere durch einen im Bedienpult integrierten Akkumulator mit Strom versorgt werden. Alternativ dazu kann der Ventilator mit einer im Bedienpult integrierten Stromversorgung verbunden sein. Der Ventilator kann elektrisch, pneumatisch oder hydraulisch angetrieben sein.

Zweckmäßig wäre es, wenn das Gehäuse des Bedienpults mindestens abschnittsweise einen den Ventilator mit der Frischluftöffnung bzw. den Frischluftöffnungen verbindenden Luftkanal ausbildet. Der Luftkanal kann zur Frischluftführung zu der in der Bedienoberfläche des Bedienpults und/oder zu der im Bedienpultträger integrierten Frischluftöffnung vorgesehen sein. Unabhängig davon, ob der Luftkanal eine oder mehrere Frischluftöffnungen im Bedienpult und/oder im Bedienpultträger mit Frischluft versorgt, ist er in der Bedienkonsole integriert ausgebildet, d.h. bildet keine davon gesonderte, von außen sichtbare Leitung auf dem Bedienstand aus. Ein den Luftkanal bildender Gehäuseabschnitt kann insbesondere einen Teil der Bedienoberfläche ausbilden, der mindestens eine Frischluftöffnung vorsieht, beispielsweise ein zwischen den Bedienfeldern ausgebildeter Gehäuseteil sein. Indem das Frischluftsystem baulich im Gehäuse des Bedienpults eingebunden ist, ergibt sich eine bauraum- und kostenreduzierte Bauweise.

Vorstellbar wäre es, dass vom Ventilator aus innerhalb des Bedienpults mehrere Luftkanäle zu jeweiligen Gruppen aus Frischluftöffnungen führen, um diese gesondert mit Frischluft zu versorgen. Die Luftkanäle können radial vom Ventilator zu den jeweiligen Frischluftöffnungen führen. Eine zweckmäßige Variante sieht vor, dass der oder die Luftkanäle zumindest abschnittsweise sowohl für die frontale als auch für die laterale Frischluftversorgung am Bedienpult konfiguriert sind. Eine gesonderte Frischluftführung könnte beispielsweise entlang von voneinander durch eine gemeinsame Wandung getrennten Kanalabschnitten erfolgen.

Eine Variante sieht vor, dass das Frischluftsystem zum Temperieren von innerhalb des Luftkanals geförderter Frischluft konfiguriert ist. Hierfür könnte mindestens eine Kühl- und/oder Heizeinheit im Bedienpult verbaut sein, insbesondere zumindest teilweise innerhalb des Luftkanals ausgebildet sein, um die mittels des Ventilators ausgestoßene Frischluft zu kühlen bzw. zu erwärmen. Denkbar wäre es sogar, dass sich die Frischluft zusätzlich oder alternativ zur Temperierung mittels der Kühl- und/oder Heizeinheit durch Abwärme des Motors der Straßenbaumaschine erwärmen lässt. Eine Variante sieht insbesondere vor, dass in Abhängigkeit einer gewünschten Temperatur der dem Fahrer bzw. Bediener zur Verfügung gestellten Frischluft ein dem Frischluftsystem auf dessen Ansaugseite bereitgestelltes Volumen eines vom Motor erwärmten Luftstroms regulierbar ist.

Gemäß einer Ausführungsform ist die innerhalb des Bedienpults auf eine gewünschte Temperatur erwärmte Frischluft derart innerhalb des Gehäuses des Bedienpults geführt, dass sich dadurch mindestens ein in der Bedienoberfläche integrierter Gehäusebereich des Bedienpults gezielt erwärmen lässt. Dies könnte beispielsweise eine in der Bedienoberfläche zwischen den Bedienfeldern gebildete Ablage, insbesondere eine als Ablage nutzbare Vertiefung, sein, in welcher der Fahrer bzw. Bediener seine Hand abstützen kann.

Gemäß einer Variante ist ein den Luftkanal begrenzender Gehäuseabschnitt als Wärmetauscher konfiguriert, um die innerhalb des Luftkanals, durch diesen Gehäuseabschnitt geführte Frischluft auf ein gewünschtes Temperaturniveau zu bringen. Der Wärmetauscher kann aus einem elektrisch leitfähigen Material hergestellt sein.

Vorzugsweise ist der Luftkanal von einem schwenkbar gelagerten Teil des Gehäuses gebildet. Der schwenkbar gelagerte Gehäuseteil kann mit mehreren Frischluftöffnungen ausgestattet und um eine im Wesentlichen horizontal verlaufende Achse in Richtung des Bedieners bzw. Fahrers geschwenkt werden, um die Frischluftöffnungen direkt auf ihn zu richten und um die Frischluftöffnungen näher an ihn heranzubringen.

Denkbar wäre es, dass der schwenkbar gelagerte Teil des Gehäuses einen oberen Gehäuseteil am Bedienpult ausbildet, in dem mehrere in Reihe quer zur Fahrtrichtung nebeneinander angeordnete Frischluftöffnungen ausgebildet sind. Im zum Bediener hin geschwenkten Zustand ließe sich der schwenkbare Gehäuseteil auch als Sonnenblende für die Bedienoberfläche des Bedienpults einsetzen, damit sich daran angezeigte Einstellungen besser ablesen lassen.

Eine Ausführungsform sieht vor, dass an einer der Bedienoberfläche abgewandten Seite des Bedienpults mindestens eine Filtereinheit für das Frischluftsystem vorgesehen ist. Diese kann im Gehäuse des Bedienpults oder im Bedienpultträger positioniert bzw. integriert sein. An dieser Filtereinheit kann mindestens ein austauschbar konfiguriertes Filterelement aufgenommen sein, das einer Ansaugseite des Ventilators vorangestellt ist, damit auf dessen Ausstoßseite gefilterte Frischluft ausgeblasen wird. Vorstellbar ist es, in der Filtereinheit mindestens zwei Filterelemente in Reihe hintereinander vorzusehen, beispielsweise einen Grobpartikelfilter und einen stromabwärts angeordneten Feinpartikelfilter, um die angesaugte Luft in mehreren Stufen zu reinigen. Der Grobpartikelfilter kann als Grobfiltermatte ausgeführt sein.

Denkbar wäre ferner eine Variante, bei welcher zwei Aktivkohlefilter sowie ein als Vorfilter dienendes drittes Filterelement, beispielsweise ein Schaumstofffilter oder ein Vliesfilter, zum Einsatz kommen. Diese drei Filterelemente können für eine vereinfachte und weniger fehleranfällige Montierbarkeit miteinander fest verbunden sein, damit sie gemeinsam ein- und ausgebaut werden können.

Für eine kompakte Bauweise könnten an der Rückseite des Bedienpults mehrere Filterelemente nebeneinander angeordnet sein. Insbesondere können die Filterelemente für eine gleichmäßige Gewichtsverteilung im bzw. am Bedienpult angeordnet sein.

Möglich wäre es, dass die Filtereinheit durch einen sich zum Ventilator hin verjüngenden Luftkanal an dessen Ansaugseite angeschlossen ist. Damit kann die Luftfilterung besser stattfinden, da die angesaugte Luft langsamer den oder die Filter passiert. Vorstellbar wäre es, dass die durch diesen Luftkanal geführte Frischluft temperierbar ist, insbesondere am Eingang des Luftkanals, sprich in einem querschnittserweiterten Bereich des Luftkanals. In diesem Bereich ist die gefilterte Frischluftströmung vergleichsweise langsam ausgebildet, lässt sich demzufolge in diesem Bereich besser erwärmen.

Die Frischluftöffnung bzw. sämtliche in der Bedienoberfläche und/oder im Bedienpultträger ausgebildeten Frischluftöffnungen können eine oder mehrere Lamellen aufweisen, insbesondere als Rundluftöffnungen mit jeweils mindestens einer verstellbaren Lamelle ausgebildet sein. Damit lässt sich die Öffnungsweite der Frischluftöffnungen bzw. der Rundluftöffnungen sowie eine Richtung der aus der Rundluftöffnung austretenden Frischluft einstellen. Es wäre denkbar, dass der Bediener bzw. Fahrer bei einer Vielzahl von über die Bedienoberfläche verteilten Frischluftöffnungen manche davon mittels daran verstellbaren Lamellen verschließt, um gezielt aus anderen, geöffneten Frischluftöffnungen Frischluft zu bekommen. Damit ließe sich die Frischluftversorgung auf einen bestimmten Bereich der Bedienoberfläche lenken. Die Frischluftöffnungen könnten auch in einer anderen Form, beispielsweise als Rechtecköffnungen, vorliegen.

Eine besonders vorteilhafte Variante sieht vor, dass die Bedienkonsole samt dem darin integrierten Frischluftsystem verschiebbar, höhenverstellbar, schwenkbar und/oder rotierbar am Bedienstand gelagert ist. Das in der Bedienkonsole integrierte Frischluftsystem geht daher sämtliche Verlagerungen der Bedienkonsole mit, steht also für die Frischluftversorgung stets direkt an der Bedienkonsole zur Verfügung, d.h. unabhängig davon in welcher Position sich die Bedienkonsole befindet. An insbesondere kleinformatigen Maschinentypen wäre es denkbar, dass die Bedienkonsole unverstellbar montiert ist.

Insbesondere ist der Bedienstand ein Fahrerbedienstand oder ein Außenbedienstand an der Straßenbaumaschine, sprich ein Fahrerbedienstand oder ein Außenbedienstand am Straßenfertiger bzw. ein Fahrerbedienstand am Beschickerfahrzeug. Als Außenbedienstand kommt insbesondere ein am Straßenfertiger, außen an einer oder an beiden Seiten der Einbaubohle platzierter Bohlenbedienstand für einen Bohlenbediener in Frage, dessen Bedienkonsole an einem Seitenschieber der Einbaubohle montiert ist.

Vorstellbar ist es, dass der als Fahrerbedienstand konfigurierte Bedienstand eine Fahrerbedienplattform aufweist, auf welcher die Bedienkonsole verschiebbar, höhenverstellbar, schwenkbar und/oder rotierbar gelagert ist. Eine am Außenbedienstand positionierte Bedienkonsole kann höhenverstellbar, um eine vertikale Achse drehbar und/oder um eine horizontale Achse neigbar sein.

Denkbar wäre es sogar, dass die Bedienkonsole über die Fahrerbedienplattform hinaus verlagerbar ist, um das Bedienpult für eine ebenfalls über die Fahrerbedienplattform hinaus verlagerte Fahrersitzkonsole in Position zu bringen. In dieser Lage befindet sich das Bedienpult nicht mehr hinter einer am Fahrerbedienstand ausgebildeten Frontscheibe, sodass es in einem exponierten Bereich seitlich des Fahrerbedienstands positioniert ist, in welchem es zu einer erhöhten Dampfentwicklung aus dem Gutbunker der Straßenbaumaschine kommen kann. In diesem Bereich ist die an der Bedienkonsole integrierte Frischluftversorgung besonders nützlich für den Fahrer, um auch dort eine ausreichend gute Luftqualität für den Fahrer zu erreichen.

Am Außenbedienstand der Einbaubohle kann die Bedienkonsole, insbesondere ein daran ausgebildetes Bedienpult, zum Steuern und Überwachen der durch die Einbaubohle durchgeführten Prozesse genutzt werden. Die an der Bedienkonsole, insbesondere am Bedienpult und/oder am Bedienpultträger, integrierte Frischluftversorgung kann seitlich der Einbaubohle die Luftqualität für den neben der Bohle befindlichen Bohlenbediener verbessern. Außer einer frontalen Frischluftversorgung aus der Bedienoberfläche des Bedienpults kann eine laterale, zusätzlich aus dem Bedienpult ausströmende Frischluft den Bohlenbediener vor Dämpfen und/oder Aerosolen aus dem Schneckenraum abschirmen. Damit könnte am Bedienpult des Außenbedienstands sowohl eine Frischluftbarriere als auch eine Frischluftversorgung für den Bohlenbediener erzeugt werden.

Gemäß einer Ausführungsform der Erfindung ist die Bedienkonsole vom Bedienstand, insbesondere das Bedienpult vom Bedienpultträger, werkzeuglos abnehmbar. Das Bedienpult lässt sich damit auf einfache Weise abbauen und kann beispielsweise vom Fahrer oder Bediener über Nacht von der Baustelle mitgenommen bzw. auf der Baustelle an einem sicheren Ort, beispielsweise in einem Container eingesperrt, verwahrt werden.

Vorstellbar wäre es, dass das Bedienpult sich im abgebauten Zustand mit einer Ladestation und/oder mit einer Reinigungsstation für die Filtereinheit des darin integrierten Frischluftsystems verbinden lässt. Mittels der Ladestation könnte ein im Bedienpult für den Ventilator des Frischluftsystems verwendeter Akkumulator geladen werden. Mittels der Reinigungsstation wäre es möglich, die am Bedienpult verbaute Filtereinheit des Frischluftsystems zu reinigen.

In der Praxis besonders hilfreich wäre es, wenn das Frischluftsystem eine positionsabhängige, materialabhängige, fahrer- bzw. bedieneranwesenheitsabhängige und/oder prozessabhängige, automatisch anpassbare Frischluftversorgungsleistung vorsieht. Ein diesbezüglich dynamisch angepasster Betrieb des Frischluftsystems könnte auf Basis von erfassten Messungen mittels mindestens einer ebenfalls in der Bedienkonsole, insbesondere im Bedienpult und/oder im Bedienpultträger, integrierten Erfassungseinheit, beispielsweise mittels einer Abstandsmesseinheit und/oder einer GPS-Daten basierten Sensorik, geschehen.

Denkbar wäre es, dass die Frischluftversorgungsleistung in Abhängigkeit von einer erfassten Position der Bedienkonsole am bzw. relativ zum Bedienstand variiert. Beispielsweise könnte die Frischluftversorgungsleistung erhöht oder sogar maximal sein, wenn die Bedienkonsole, insbesondere das Bedienpult, über die Fahrerbedienplattform des Fahrerbedienstands hinausgeschwenkt positioniert ist. Eine Variante sieht vor, dass die Frischluftversorgungsleistung dann automatisch erhöht wird, wenn der Bohlenbediener das am Außenbedienstand befestigte Bedienpult vom Bedienpultträger, insbesondere von einer dafür vorgesehenen Halterung, abnimmt und sich damit in die Nähe des vor der Einbaubohle liegenden Querverteilungskanals bewegt, aus welchem beim Einbauprozess die meisten Dämpfe entstehen.

Vorzugsweise ist die Frischluftversorgungsleistung automatisch in Abhängigkeit des spezifischen Einbaumaterials anpassbar, welches je nach Zusammensetzung und/oder Temperatur zu unterschiedlicher Dampf- und/oder Aerosolbildung tendiert. Derartige Materialeigenschaften können im Bereich des Gutbunkers gemessen werden. Denkbar wäre es, dass die Erfassung der spezifischen Materialeigenschaften des Einbaumaterials mittels Scannen eines LKW Lieferscheins, insbesondere anhand einer im Bedienpult integrierten Scanneinrichtung, durchführbar ist und/oder auf Basis einer webbasierten Datenübertragung geschieht, die zwischen der Straßenbaumaschine und einer diese versorgende Materiallieferkette eingerichtet ist.

Die Frischluftversorgungsleistung könnte in Anpassung an einen an der Straßenbaumaschine eingestellten Betriebsmodus angepasst sein, beispielsweise automatisch in einen Grundbetrieb gestellt werden, wenn sich die Straßenbaumaschine im Einbaubetrieb bzw. Beschickungsbetrieb befindet. Eine reduzierte Frischluftversorgungsleistung könnte automatisch dann erfolgen, wenn die Straßenbaumaschine lediglich auf der Baustelle umgesetzt wird, sprich daran kein Einbau- bzw. Beschickungsprozess abläuft.

Mittels einer fahrer- bzw. bedieneranwesenheitsabhängigen Frischluftversorgungsleistung ließe sich das Frischluftsystem automatisch dann ausschalten, wenn kein Bediener bzw. Fahrer am Bedienpult der Bedienkonsole anwesend ist. Eine Frischluftversorgung an einem Außenbedienstand der Einbaubohle könnte beispielsweise dann deaktiviert werden, wenn sich der Bohlenbediener davon wegbewegt. Eine dafür eingesetzte Abstandsmessung könnte mittels eines im Bedienpult integrierten Sensors durchgeführt werden. Eine weitere Möglichkeit bestünde darin, das Frischluftsystem abzuschalten, wenn über einen bestimmten Zeitraum hinweg das Bedienpult nicht genutzt bzw. kein Befehl daran eingegeben wird.

Die Erfindung betrifft des Weiteren die Verwendung einer an einem offen ausgebildeten Bedienstand einer Straßenbaumaschine installierten Bedienkonsole zur Frischlufterzeugung und Frischluftversorgung. Als ein offen ausgebildeter Bedienstand ist ein zumindest an einer Seite zur Umgebung hin geöffneter Bereich eines Fahrers bzw. eines Bedieners der Straßenbaumaschine gemeint, sprich das Gegenteil von einem allseitig umschlossenen Raum, wie ihn eine herkömmliche Fahrzeugkabine ausbildet. Am erfindungsgemäß offen ausgebildeten Bedienstand liegen damit für den sich darin aufhaltenden Fahrer bzw. Bediener vergleichbare atmosphärische Bedingungen vor wie in der an den offen ausgebildeten Bedienstand angrenzenden Umgebung.

Dadurch, dass bei der Erfindung direkt mittels der am offen ausgebildeten Bedienstand verwendeten Bedienkonsole Frischluft erzeugt und insbesondere über ein Bedienpult der Bedienkonsole und/oder über einen Bedienpultträger der Bedienkonsole ausgegeben wird, lassen sich die am Bedienstand vorliegenden atmosphärischen Bedingungen für den dort positionierten Fahrer bzw. den Bediener verbessern. Insbesondere wird dadurch die Luftqualität verbessert.

Vor allen Dingen werden zur Frischluftlufterzeugung sowie zur Frischluftausgabe Mittel verwendet, die allesamt in der Bedienkonsole integriert sind. Selbst für die Bedienung des Frischluftsystems werden bevorzugterweise ausschließlich in der Bedienkonsole integrierte Bedieneinheiten verwendet.

Dadurch, dass für die Frischlufterzeugung und auch für die Frischluftversorgung die am offenen Bedienstand vorliegende Bedienkonsole verwendet wird, kann dieses als multifunktionales Modul standardmäßig hergestellt und an verschiedenen Straßenbaumaschinentypen zum Einsatz kommen.

Im Folgenden wird die vorliegende Erfindung anhand von Figuren genauer erläutert. Dabei zeigen:
- Fig. 1: eine Straßenbaumaschine in Form eines Straßenfertigers,
- Fig. 2: eine Straßenbaumaschine in Form eines Beschickerfahrzeugs für einen Straßenfertiger,
- Fig. 3A: ein Bedienpult für einen Bedienstand,
- Fig. 3B: eine Schnittdarstellung des in Fig. 3A gezeigten Bedienpults,
- Fig. 4A: ein weiteres Bedienpult für einen Bedienstand,
- Fig. 4B: eine Schnittdarstellung des in Fig. 4A gezeigten Bedienpults,
- Fig. 5A: ein weiteres Bedienpult für einen Bedienstand,
- Fig. 5B: eine Schnittdarstellung des in Fig. 5A gezeigten Bedienpults,
- Fig. 6: eine Bedienkonsole samt Bedienpult und Bedienpultträger in isolierter Darstellung,
- Fig. 7A: eine weitere Bedienkonsole mit einem Bedienpult für einen Außenbedienstand,
- Fig. 7B: das in Fig. 7A gezeigte Bedienpult in einem aus seiner Halterung herausgenommen Zustand, und
- Fig. 8: eine schematische Darstellung eines Straßenfertigers aus der Draufsicht.

Gleiche technische Komponenten sind in den Figuren durchgängig mit denselben Bezugszeichen versehen.

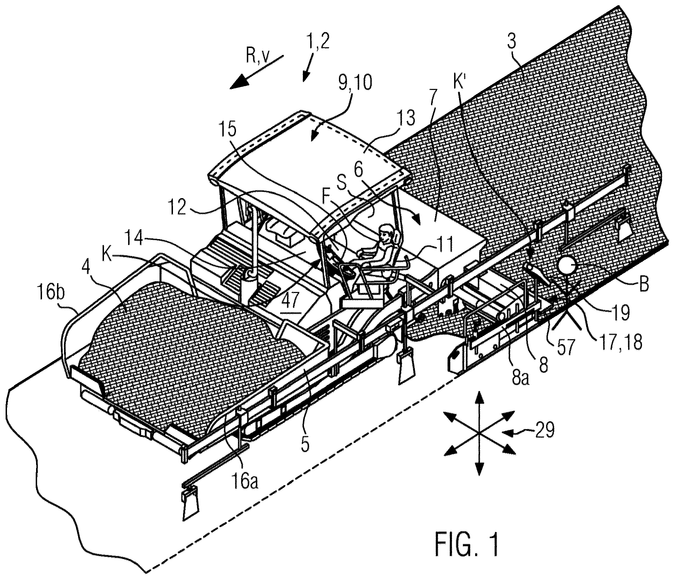

Fig. 1 zeigt eine Straßenbaumaschine 1, die als Straßenfertiger 2 zum Herstellen einer neuen Einbauschicht 3 konfiguriert ist. Der Straßenfertiger 2 stellt die neue Einbauschicht 3 in Fahrtrichtung R her. Dafür setzt der Straßenfertiger 2 Einbaumaterial 4 ein, welches in einem an ihm ausgebildeten Gutbunker 5 bevorratet ist. Aus dem Gutbunker 5 wird das darin bevorratete Einbaumaterial 4 mittels einer nicht dargestellten Längsfördereinrichtung entgegen der Fahrtrichtung R zu einer Einbaubohle 6 transportiert, die dazu ausgebildet ist, das ihr vorgelegte Einbaumaterial 4 zur neuen Einbauschicht 3 zu verdichten.

Die in Fig. 1 gezeigte Einbaubohle 6 ist als Ausziehbohle konfiguriert. Die Einbaubohle 6 verfügt über eine Grundbohle 7 und seitliche Ausziehteile 8 zum Einstellen einer gewünschten Einbaubreite der neuen Einbauschicht 3.

Der Straßenfertiger 2 aus Fig. 1 umfasst einen Bedienstand 9 für einen Fahrer F. Der Bedienstand 9 liegt somit als Fahrerbedienstand 10 vor. Fig. 1 zeigt, dass der Fahrerbedienstand 10 zur Seite S hin und nach hinten offen ausgebildet ist, sprich darauf, ohne Gegenmaßnahmen durchzuführen, die atmosphärischen Bedingungen, insbesondere die Luftqualität aus der Umgebung des Fahrerbedienstands 10 vorliegen.

In Fig. 1 sitzt der Fahrer F auf einer schwenkbar konfigurierten Sitzkonsole 11, mittels welcher er über eine Fahrerbedienplattform 12 hinausgeschwenkt, seitlich des Fahrerbedienstands 10 positioniert ist, wodurch er den Bereich neben dem Straßenfertiger 2 gut überblicken kann. In dieser über die Fahrerbedienplattform 12 hinausgeschwenkten Position sitzt der Fahrer F allerdings nicht mehr hinter einer am Dachaufbau 13 vorgesehenen Frontscheibe 14, so dass er aus dem Gutbunker 5 kommenden Dämpfen und/oder Aerosolen sowie auch Dämpfen und/oder Aerosolen aus dem Bereich der Einbaubohle 6 stärker ausgesetzt ist.

Auf dem Fahrerbedienstand 10 des Straßenfertigers 2 ist für den Fahrer F eine Bedienkonsole K mit einem Bedienpult 15 vorgesehen. Die Bedienkonsole K ist am Aufbau des Fahrerbedienstands 10 befestigt, insbesondere an einem Konsolenschlitten querverschiebbar montiert. Das Bedienpult 15 ist zum Steuern und Überwachen von mittels des Straßenfertigers 2 durchführbaren Prozessen konfiguriert. Beispielsweise kann der Fahrer F am Bedienpult 15 die Geschwindigkeit v des Straßenfertigers 2 in Fahrtrichtung R einstellen. Des Weiteren kann der Fahrer F insbesondere das Bedienpult 15 zum Einstellen von Gutbunkerhälften 16a, 16b benutzen, diese beispielsweise einwärts schwenken, um das im Gutbunker 5 bevorratete Einbaumaterial 4 in die Mitte zur Längsfördereinrichtung zu schaffen. In Fig. 1 sind die beiden Gutbunkerhälften 16a, 16b jedoch vollständig nach außen verstellt, um eine maximale Menge an Einbaumaterial 4 aufnehmen zu können.

Ferner zeigt Fig. 1 einen weiteren Bedienstand 17, der außen an der Einbaubohle 6 einen Arbeitsplatz für einen Bohlenbediener B schafft, um daran Prozesse des Straßenfertiger 2, insbesondere der Einbaubohle 6 zu steuern und zu überwachen. Dieser am Seitenschieber 8a der Ausziehbohle 8 geschaffene Bedienstand 17 liegt mithin als Außenbedienstand 18 vor.

Zum Steuern und Überwachen des Betriebs der Einbaubohle 6, einschließlich deren Ausziehbohlen 8, ist für den Bohlenbediener B am Außenbedienstand 18 eine weitere Bedienkonsole K' mit einem Bedienpult 19 vorgesehen. Da sich der Bohlenbediener B in unmittelbarer Nähe des mittels der Ausziehbohle 8 verarbeiteten Einbaumaterials 4 befindet, ist er in diesem Außenbereich Dämpfen und/oder Aerosolen ausgesetzt.

Die in Fig. 1 am Straßenfertiger 2 zur Umgebung hin offen vorgesehenen Bedienstände 9, 17 sind zwar gut durchlüftet, werden allerdings auch von den während des Einbaus entstehenden Dämpfen und/oder Aerosolen erreicht. Da die in Fig. 1 am Straßenfertiger 2 gezeigten Bedienstände 9, 17 an verschiedenen Straßenfertigertypen standardmäßig vorhanden sind, besteht für diese Bedienstände 9, 17 typenübergreifend die Problematik einer durch Dämpfe und/oder Aerosole beeinträchtigten Luftqualität für den Fahrer F bzw. den Bohlenbediener B.

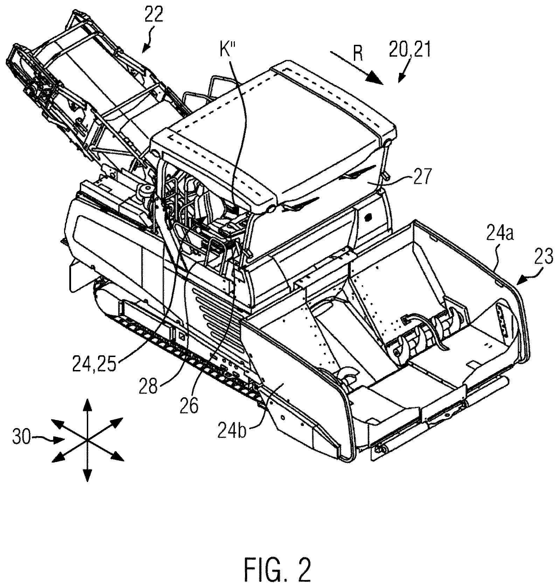

Fig. 2 zeigt eine weitere Straßenbaumaschine 20, die in Form eines Beschickerfahrzeugs 21 für einen Straßenfertiger 2 konfiguriert ist. Ein solches Beschickerfahrzeug 21 wird in der Praxis dafür eingesetzt, einen Straßenfertiger 2 gemäß Fig. 1 mit Einbaumaterial 4 zu versorgen. Dafür fährt das Beschickerfahrzeug 21 in Fahrtrichtung R vor dem Straßenfertiger 2 und wirft mittels einer am Beschickerfahrzeug 21 ausgebildeten Fördereinrichtung 22 Einbaumaterial 4 in den Gutbunker 5 des ihm hinterherfahrenden Straßenfertigers 2.

Das Beschickerfahrzeug 21 aus Fig. 2 verfügt über einen Gutbunker 23 zur Aufnahme von Einbaumaterial 4. Am Gutbunker 23 können quer zur Fahrtrichtung R verstellbare Gutbunkerhälften 24a, 24b vorhanden sein. Die Fördereinrichtung 22 reicht bis zum Gutbunker 23 und kann somit das darin bevorratete Einbaumaterial 4 aus diesem heraus, entgegen der Fahrtrichtung R in Richtung des nachfolgenden Straßenfertigers 2 transportieren und diesem übergeben.

Gemäß Fig. 2 verfügt das Beschickerfahrzeug 21 über einen Bedienstand 24, der als Fahrerbedienstand 25 vorliegt. Auch dieser Fahrerbedienstand 25 ist zu den Seiten hin und nach hinten offen ausgebildet, so dass Dämpfe und/oder Aerosole über die offenen Seiten des Fahrerbedienstands 25 und von der hinten gelagerten Fördereinrichtung 22 zum Fahrer F gelangen können. Auf dem Fahrerbedienstand 25 ist für den Fahrer F eine Bedienkonsole K" mit einem Bedienpult 26 zum Steuern und Überwachen der vom Beschickerfahrzeug 21 durchgeführten Prozesse gelagert. Das Bedienpult 26 ist in Fig. 2 hinter einer Frontscheibe 27 des Beschickerfahrzeugs 21 positioniert, lässt sich jedoch ggf. auch in eine Position neben dem Fahrerbedienstand 25 bringen, d.h. über dessen Fahrerbedienplattform 28 hinausschwenken.

In den Fig. 1 und 2 wird anhand der schematisch dargestellten Verstellachsen 29, 30 gezeigt, dass sich die jeweiligen 7Bedienkonsolen K, K" auf den jeweiligen Fahrerbedienständen 10, 25 in beliebige Richtungen verstellen lassen. Insbesondere können die jeweiligen Bedienkonsolen K, K" samt der daran gelagerten Bedienpulte 15, 26 auch um die jeweiligen Verstellachsen verdreht bzw. rotiert und verschwenkt werden, damit sich die Bedienpulte 15, 26 in eine gewünschte Position bringen lassen.

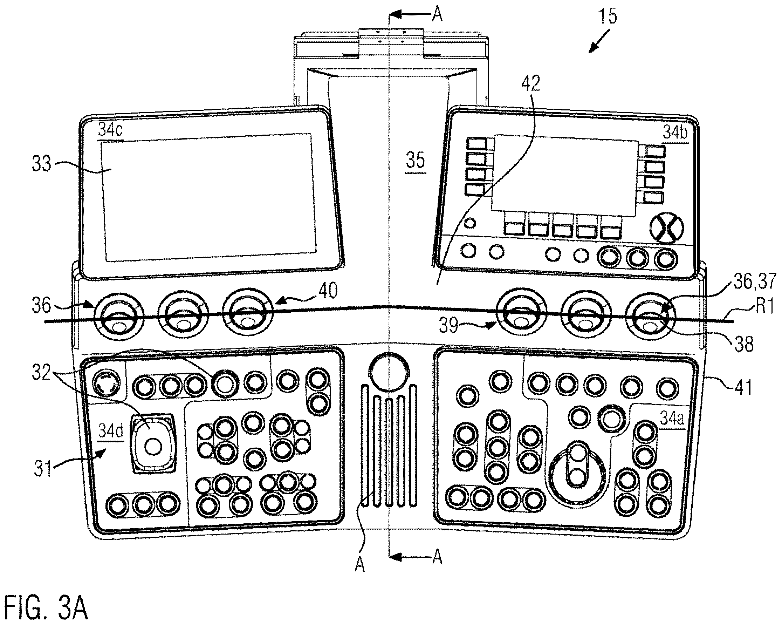

Fig. 3A zeigt eine erste Variante des Bedienpults 15 des Straßenfertigers 2. Das Bedienpult 26 des Beschickerfahrzeugs 21 kann ähnlich konfiguriert sein. Das Bedienpult 15 aus Fig. 3A verfügt über eine Bedienoberfläche 31 mit einer Vielzahl von Bedieneinheiten 32, mittels welcher sich der Betrieb des Straßenfertigers 2 steuern lässt. Gemäß Fig. 3A ist als eine Bedieneinheit 32 ein Touch-Display 33 am Bedienpult 15 vorgesehen. Es wäre denkbar, dass das Touch-Display 33 Bestandteil eines herausnehmbar am Bedienpult 15 gelagerten Tabletcomputers ist.

Das Bedienpult 15 aus Fig. 3A verfügt über insgesamt vier Bedienfelder 34a, 34b, 34c, 34d. Alternativ könnte das Bedienpult 15 auch nur drei davon, beispielsweise die Bedienfelder 34a, 34b, 34d aufweisen, sprich ohne das mit dem Touch-Display 33 gebildete Bedienfeld 34c vorliegen. Des Weiteren umfasst das Bedienpult 15 ein darin integriertes Frischluftsystem 35 mit einer Vielzahl von in der Bedienoberfläche 31 ausgebildeten Frischluftöffnungen 36. In Fig. 3A sind die Frischluftöffnungen 36 jeweils als Rundluftöffnungen 37 ausgebildet und weisen mindestens eine verstellbare Lamelle 38 auf. Mittels der Lamellen 38 lässt sich eine gewünschte Strömungsrichtung für die Frischluftversorgung einstellen. Außerdem können die Lamellen 38 zum Schließen der Rundluftöffnungen 37 dienen.

Fig. 3A zeigt, dass eine Gruppe 39 aus drei Frischluftöffnungen 36 zwischen den Bedienfeldern 34a, 34b in Reihe R1 nebeneinander angeordnet sind. Gemäß dieser Anordnung ist eine weitere Gruppe 40 aus Frischluftöffnungen 36 zwischen den Bedienfeldern 34c, 34d in der Bedienoberfläche 31 ausgebildet. Damit wird im Wesentlichen über die gesamte Breite des Bedienpults 15 eine Frischluftversorgung zur Verfügung gestellt. Der in Fahrtrichtung R hinter dem Bedienpult 15 positionierte Fahrer F profitiert damit unmittelbar an seinem Arbeitsplatz von einer durch Frischluft angereicherten, verbesserten Luftqualität.

Insbesondere findet die Frischluftversorgung unabhängig von einer Position bzw. eingestellten Lage des Bedienpults 15, 26 auf den jeweiligen Fahrerbedienständen 10, 25 statt, so dass die Frischluftversorgung automatisch am Ort des Bedienpults 15, 26 vorliegt.

Das Bedienpult 15 aus Fig. 3A weist ein Gehäuse 41 auf, in welchem ein Luftkanal 42 des Frischluftsystems 35 integriert ist. Der Luftkanal 42 lenkt die Frischluft zu den Frischluftöffnungen 36, damit sie dort ausströmen kann.

Gemäß Fig. 3A sind die Frischluftöffnungen 36 gleichmäßig über die Bedienoberfläche 31 verteilt. Dadurch ist es möglich, dass der Fahrer F die Frischluftversorgung auf die beiden Bedienfelder 34a, 34b einstellt, indem er die Gruppe 40 aus Frischluftöffnungen 36 schließt bzw. die Frischluftversorgung auf die beiden Bedienfelder 34c, 34d einstellt, indem er die Gruppe 39 aus Frischluftöffnungen 36 schließt. Die in Fig. 3A gezeigte Konfiguration ermöglicht es damit, die Frischluftversorgung wahlweise an den beiden Bedienfeldern 34a, 34b bzw. an den beiden Bedienfeldern 34c, 34d einzustellen.

Weiter zeigt Fig. 3A eine Ablage A, die zwischen den Bedienfeldern 34a, 34d im Gehäuse 41 ausgebildet ist.

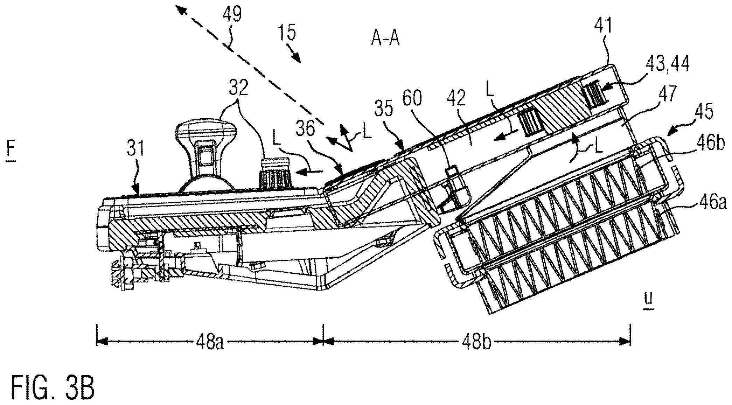

Fig. 3B zeigt einen Schnitt A-A durch das in Fig. 3A gezeigte Bedienpult 15. Das im Bedienpult 15 integrierte Frischluftsystem 35 verfügt gemäß Fig. 3B über einen Ventilator 43, der als Radialventilator 44 konfiguriert ist. Das Frischluftsystem 35 verfügt weiter über eine Filtereinheit 45 mit darin eingebauten Filterelementen 46a, 46b. Das Filterelement 46a kann als Grobpartikelfilter konfiguriert sein. Das stromabwärts positionierte Filterelement 46b kann ein Feinpartikelfilter sein. Aus der Umgebung U des Bedienpults 15 wird Luft mittels des Ventilators 43 durch die Filtereinheit 45 angesaugt. Mittels der Filtereinheit 45 gereinigte Luft, d.h. gefilterte Frischluft L, kann mittels des Radialventilators 44 axial angesaugt und radial in den Luftkanal 42 geblasen werden, um an den Frischluftöffnungen 36 auszutreten. Ein zwischen der Filtereinheit 45 und dem Ventilator 43 gebildeter Luftkanal 47 weist zum Ventilator 43 hin einen sich verjüngenden Querschnitt auf.

Ferner zeigt Fig. 3B, dass das Bedienpult 15 in einen unteren, horizontal gebildeten Abschnitt 48a und einen oberen, zum horizontalen Abschnitt 48a geneigten Abschnitt 48b, welcher die Frischluftöffnungen 36 aufweist, unterteilt ist. Dadurch sind die Frischluftöffnungen 36 derart ausgerichtet, dass sich die aus ihnen ausströmende Frischluft L frontal auf den Fahrer F richten lässt, mithin die Frischluft L direkt aus den Frischluftöffnungen 36 zum Fahrer F strömt. Diese direkte Strömung ist durch das Bezugszeichen 49 angedeutet.

Weiter zeigt Fig. 3B eine Kühl-/Heizeinheit 60 in schematischer Darstellung, um die im Luftkanal 42 transportierte Frischluft L auf ein gewünschtes Temperaturniveau zu bringen.

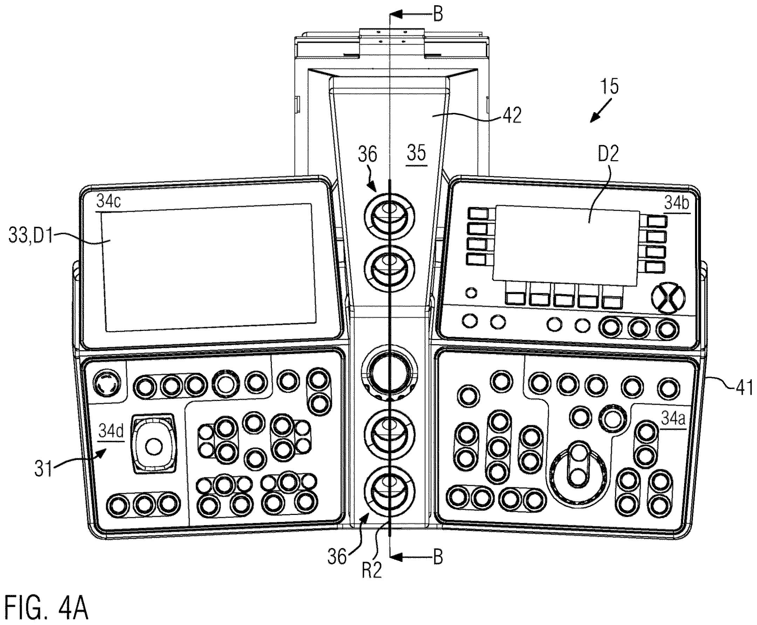

Fig. 4A zeigt eine Variante des Bedienpults 15, bei welcher die Frischluftöffnungen 36 über die Bedienoberfläche 31 zwischen benachbarten Bedienfeldern 34a, 34d bzw. 34b, 34c positioniert sind. Dadurch wird erreicht, dass das Bedienpult 15 eine insgesamt kompaktere Anordnung der Bedienfelder 34a, 34b bzw. 34c, 34d besitzt. Da die Bedienfelder 34b, 34c jeweils Displays D1, D2 aufweisen, nehmen die jeweiligen Hälften des Bedienpults 15 im Wesentlichen die Form eines Notebooks bzw. Laptops ein, sind daher für den Fahrer F gut zu bedienen.

Gemäß Fig. 4A besitzt das Frischluftsystem 35 einen im Gehäuse 41 des Bedienpults 15 integrierten Luftkanal 42, welcher zwischen den Bedienfeldern 34a, 34b und den Bedienfeldern 34c, 34d ausgebildet ist. Die darin enthaltenen Frischluftöffnungen 36 sind längs des Bedienpults 15 in einer Reihe R2 hintereinander gruppiert angeordnet.

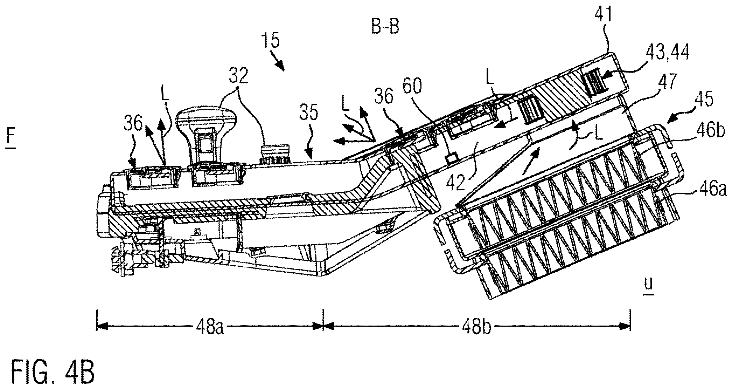

Fig. 4B zeigt eine Schnittdarstellung des in Fig. 4A gezeigten Bedienpults 15 im Schnittverlauf B-B.

Gemäß Fig. 4B ist mittels der im unteren Abschnitt 48a des Bedienpults 15 gebildeten Frischluftöffnungen 36 eine Versorgung des Fahrers F mit Frischluft L in dessen unmittelbarer Nähe möglich. Insgesamt ergibt sich damit eine besonders nahe am Fahrer F stattfindende Frischluftausgabe aus der Bedienoberfläche 31, so dass die Luftqualität in dessen Arbeitsbereich besonders gut verbessert werden kann.

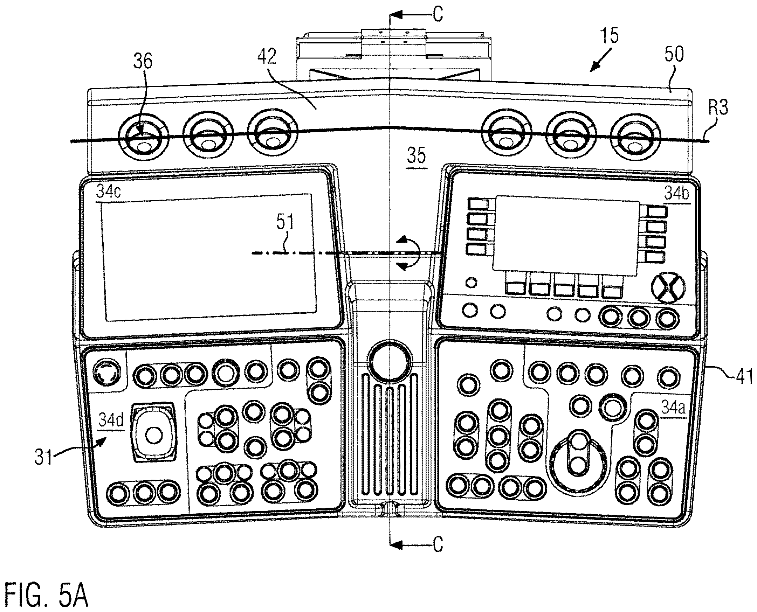

Fig. 5A zeigt das Bedienpult 15 gemäß einer weiteren Variante. Bei diesem Bedienpult 15 sind die Frischluftöffnungen 36 oberhalb der Bedienfelder 34a - 34d positioniert. Das Bedienpult 15 aus Fig. 5A bildet somit das Frischluftsystem 35 in seinem oberen Abschnitt 48b aus. Das Gehäuse 41 des Bedienpults 15 verfügt über einen schwenkbaren Teil 50, welcher oberhalb der Bedienfelder 34b, 34c den Luftkanal 42 ausbildet. Alternativ dazu kann der Teil 50 des Gehäuses 41 unbeweglich, d.h. nicht schwenkbar sein.

Der in Fig. 5A gezeigte Teil 50 des Gehäuses 41 ist um eine zwischen den Bedienfeldern 34b, 34c verlaufende Achse 51 schwenkbar gelagert. Damit kann der Teil 50 samt der darin integrierten Frischluftöffnungen 36 derart zum Fahrer F hin aufgerichtet werden, dass die aus den Frischluftöffnungen 36 ausströmende Frischluft L frontal in Richtung des Fahrers F strömt.

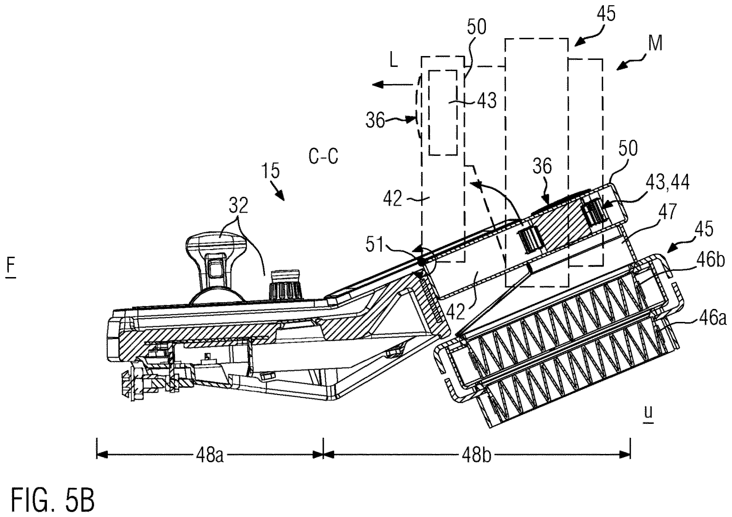

Fig. 5B zeigt das Bedienpult 15 aus Fig. 5A im Schnitt C-C. In dieser Schnittdarstellung ist schematisch ein hochgeklappter Teil 50 des Gehäuses 41 dargestellt, um den Fahrer F besser frontal mit Frischluft L aus den Frischluftöffnungen 36 zu versorgen. Bei dieser Variante bildet das Frischluftsystem 35 ein am Bedienpult 15 integriertes Schwenkmodul M aus. Durch dieses Schwenkmodul M kann Frischluft L einerseits gezielt in Richtung des Fahrers F ausströmen und andererseits kann die Frischluftversorgung insgesamt näher an den Fahrer F herangerückt werden. Außerdem kann das Schwenkmodul M eine Sonnenblende für das Bedienpult 15 bildet, sodass daran angezeigte Einstellungen besser lesbar sind.

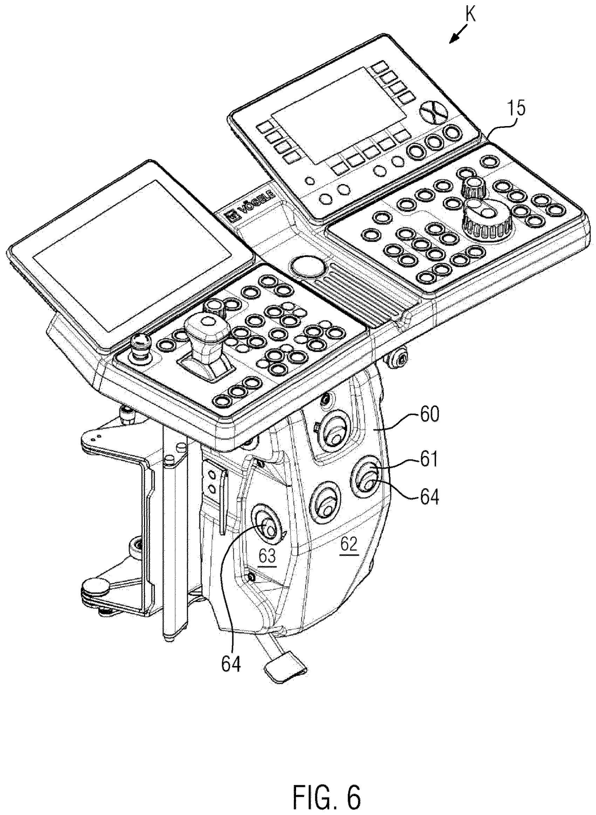

Fig. 6 zeigt die Bedienkonsole K in isolierter Darstellung. Die Bedienkonsole K" kann einen vergleichbaren Aufbau haben. Die Bedienkonsole K weist einen Bedienpultträger 60 für das Bedienpult 15 auf. Im Bedienpultträger 60 sind mehrere Frischluftöffnungen 61 ausgebildet, um den Bediener bzw. Fahrer mit Frischluft von unten zu versorgen.

Weiter zeigt Fig. 6, dass sich am Bedienpultträger60 sowohl an seiner zum Bediener gerichteten Front 62 als auch an seinen Seiten 63 Frischluftöffnungen 60 befinden. Durch Lamellen 64 können auch die seitlichen Frischluftöffnungen 61 auf den Bediener bzw. Fahrer ausgerichtet werden.

Anstelle des in Fig. 6 gezeigten Bedienpults 15, das keine Frischluftöffnungen vorsieht, könnte ein gemäß den Fig. 3 bis 5 gezeigtes Bedienpult 15 mit Frischluftöffnungen 36 auf dem Bedienpultträger 60 eingesetzt werden, wodurch eine Bedienkonsole K vorliegt, bei welcher sowohl im Bedienpultträger 60 als auch im Bedienpult 15 Frischluftöffnungen 36, 61 ausgebildet sind. Alternativ könnte der in Fig. 6 gezeigte Bedienpultträger 60 ohne Frischluftöffnungen 61 ausgebildet sein, wobei dann ein mit Frischluftöffnungen 36 versehenes Bedienpult 15 gemäß den Fig. 3 bis 5 zum Einsatz kommen kann. Anstelle eines Bedienpults 15 mit vier Bedienfeldern gemäß Fig. 6 kann auch ein Bedienpult mit weniger Bedienfeldern auf dem Bedienpultträger 60 befestigt sein. Der in Fig. 6 gezeigte Bedienpultträger 60 ist an einer (nicht gezeigten) quer auf dem Bedienstand 9 installierten Konsolenführungen bzw. -Schlitten derart gekoppelt, dass die Bedienkonsole K samt dem Bedienpultträger 60 und dem Bedienpult 15 auf dem Bedienstand 9 querverschiebbar gelagert ist. Des Weiteren kann die Bedienkonsole K schwenkbar und/oder rotierbar gelagert sein.

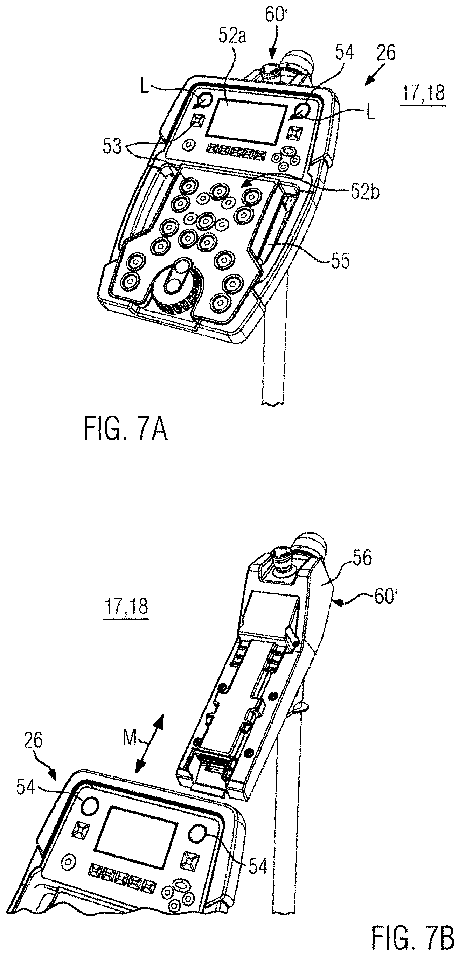

Fig. 7A zeigt die Bedienkonsole K' samt Bedienpult 19, welche am Straßenfertiger 2 aus Fig. 1 am Außenbedienstand 18 der Einbaubohle 6 positioniert ist, in isolierter Darstellung. Das gemäß der Darstellung im Freien positionierte Bedienpult 19 aus Fig. 7A verfügt über zwei Bedienfelder 52a, 52b. In den beiden Bedienfeldern 52a, 52b sind jeweilige Bedieneinheiten 53 zum Steuern und Überwachen eines Betriebs der Einbaubohle 6 vorhanden. Im oberen Bedienfeld 52a sind in den oberen Ecken zwei Frischluftöffnungen 54 schematisch dargestellt, um den Bohlenbediener B mit Frischluft L zu versorgen. Auch diese Frischluftöffnungen 54 sind Teil eines im Bedienpult 15 integrierten Frischluftsystems 35.

Alternativ zur Darstellung aus Fig. 7A könnten die Frischluftöffnungen 54 auch zwischen den Bedienfeldern 52a, 52b positioniert sein.

Ferner zeigt Fig. 7A, dass das Bedienpult 15 einen Griff 55 aufweist, mittels dessen Betätigung sich das Bedienpult 15 gemäß der Darstellung in Fig. 7B von einem Bedienpultträger 60' lösen, sprich aus einer Halterung 56 des Bedienpultträgers 60' entfernen lässt. Damit kann der Bohlenbediener B das Bedienpult 26 werkzeuglos aus der Halterung 56 abbauen und mit sich führen, um sich damit beispielsweise an eine andere Stelle der Einbaubohle 6 zu bewegen.

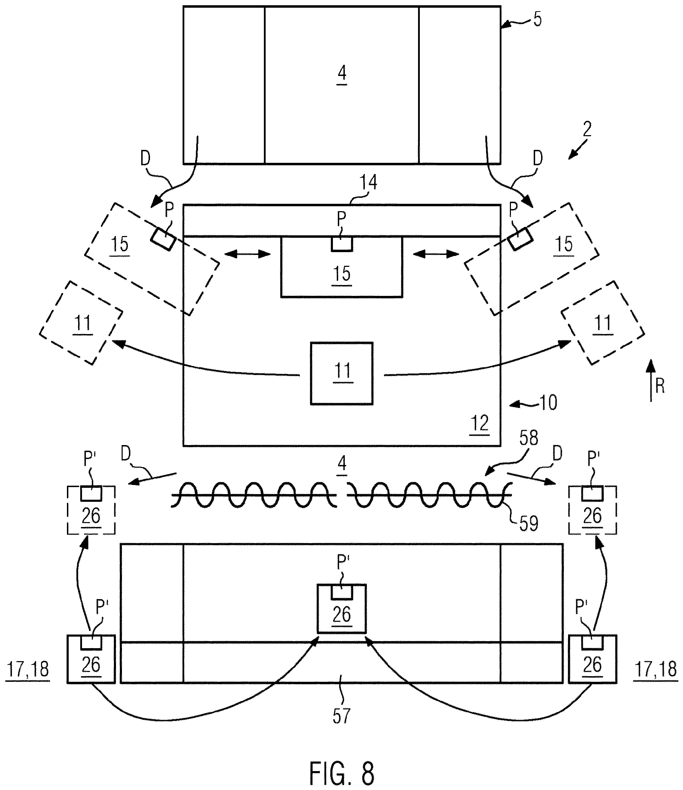

Fig. 8 zeigt den Straßenfertiger 2 in schematischer Darstellung aus der Draufsicht. Fig. 8 zeigt, dass das Bedienpult 15 des Fahrerbedienstands 10 nach links und rechts über die Fahrerbedienplattform 12 hinausgeschwenkt werden kann, wenn der Fahrer F auf der Sitzkonsole 11 neben dem Fahrerbedienstand 10 positioniert ist. In diesen Zonen neben der Fahrerbedienplattform 12 ist der Fahrer F Dämpfen D und/oder Aerosolen aus dem Gutbunker 5 verstärkt ausgesetzt. Das erfindungsgemäße Bedienpult 15, insbesondere das darin integrierte Frischluftsystem 35 kann dazu konfiguriert sein, in diesen Zonen eine erhöhte Frischlufterzeugung und -versorgung automatisch einzustellen.

Ferner zeigt Fig. 8, dass der Bohlenbediener B das vom Außenbedienstand 18 entnommene Bedienpult 26 in verschiedene Bereiche mitnehmen kann. Beispielsweise kann der Bohlenbediener B mittig auf einem Steg 57 der Einbaubohle 6 mit dem Bedienpult 26 stehen. Ebenso gut könnte sich der Bohlenbediener B mit dem Bedienpult 26 in der Hand zum Schneckenraum 58 bewegen, in welchem eine Querverteilerschnecke 59 das Einbaumaterial 4 vor der Einbaubohle 6 ausbreitet. Auch in diesen Bereichen, in welchen der Bohlenbediener B mit dem herausgelösten Bedienpult 26 positioniert sein kann, können sich Dämpfe D und/oder Aerosole extremer entwickeln. Deshalb kann durch Detektieren, dass sich das Bedienpult 26 an diesen Zonen befindet, die Frischlufterzeugung sowie -versorgung mittels des Bedienpults 26 automatisch gesteigert werden.

Die in Zusammenhang mit Fig. 8 beschriebene gesteigerte Frischlufterzeugung und -versorgung basiert beispielsweise auf einem im Bedienpult 15, 26 integrierten Positionserfassungssystems P, P`, mittels dessen sich die Position des Bedienpults 15, 26 im Bereich des Straßenfertigers 2 erfassen lässt und diesbezüglich die Frischlufterzeugung und -versorgung automatisch gesteigert bzw. reduziert werden kann.

## Patentansprüche

1. Straßenbaumaschine (1, 20), die in Form eines Straßenfertigers (2) oder eines Beschickerfahrzeugs (21) für einen Straßenfertiger (2) vorliegt, umfassend mindestens einen Bedienstand (9, 17, 24) mit wenigstens einer offen ausgebildeten Seite (S), wobei der Bedienstand (9, 17, 24) mindestens eine Bedienkonsole (K, K`, K") zum Steuern und Überwachen von mittels der Straßenbaumaschine (1, 20) durchführbaren Prozessen sowie ein Frischluftsystem (35) mit mindestens einer Frischluftöffnung (36, 54, 61) umfasst, **dadurch gekennzeichnet, dass** das Frischluftsystem (35) vollständig in der Bedienkonsole (K, K`, K") integriert ist.

2. Straßenbaumaschine nach Anspruch 1, **dadurch gekennzeichnet, dass** die Bedienkonsole (K, K`, K") ein Bedienpult (15, 19, 26) mit einer Bedienoberfläche (31) sowie einen Bedienpultträger (60) für das Bedienpult (15, 19, 26) aufweist, wobei das Frischluftsystem (35) zumindest teilweise im Bedienpult (15, 19, 26) und/oder zumindest teilweise im Bedienpultträger (60) integriert ist.

3. Straßenbaumaschine nach Anspruch 2, **dadurch gekennzeichnet, dass** eine Ansteuerung des Frischluftsystems (35) anhand mindestens einer im Bedienpult (15, 29, 26) und/oder im Bedienpultträger (60) integrierten Bedieneinheit (32) ausführbar ist.

4. Straßenbaumaschine nach Anspruch 2 oder 3, **dadurch gekennzeichnet, dass** das Bedienpult (15, 19, 26) mindestens ein Touch-Display (33) aufweist, das zur Ansteuerung des Frischluftsystems (35) konfiguriert ist.

5. Straßenbaumaschine nach einem der vorigen Ansprüche 2 bis 4, **dadurch gekennzeichnet, dass** in der Bedienoberfläche (31) und/oder in einer durch den Bedienpultträger (60) gebildeten Oberfläche wenigstens eine Frischluftöffnung (36, 54, 61) ausgebildet ist.

6. Straßenbaumaschine nach einem der vorigen Ansprüche 2 bis 5, **dadurch gekennzeichnet, dass** das Bedienpult (15, 19, 26) ein Gehäuse (41) und das Frischluftsystem (35) mindestens einen in dem Gehäuse (41) gelagerten Ventilator (43) aufweisen.

7. Straßenbaumaschine nach Anspruch 6, **dadurch gekennzeichnet, dass** das Gehäuse (41) mindestens abschnittsweise einen den Ventilator (43) mit der Frischluftöffnung (36, 61) verbindenden Luftkanal (42) ausbildet.

8. Straßenbaumaschine nach Anspruch 7, **dadurch gekennzeichnet, dass** das Frischluftsystem (35) zum Temperieren von innerhalb des Luftkanals (42) geförderter Frischluft (L) konfiguriert ist.

9. Straßenbaumaschine nach Anspruch 7 oder 8, **dadurch gekennzeichnet, dass** der Luftkanal (42) von einem schwenkbar gelagerten Teil (50) des Gehäuses (41) gebildet ist.

10. Straßenbaumaschine nach einem der vorigen Ansprüche 2 bis 9, **dadurch gekennzeichnet, dass** an einer der Bedienoberfläche (31) abgewandten Seite des Bedienpults (15, 19, 26) mindestens eine Filtereinheit (45) für das Frischluftsystem (35) vorgesehen ist.

11. Straßenbaumaschine nach einem der vorigen Ansprüche, **dadurch gekennzeichnet, dass** die Frischluftöffnung (36, 54, 61) mit mindestens einer verstellbaren Lamelle (38) ausgebildet ist.

12. Straßenbaumaschine nach einem der vorigen Ansprüche, **dadurch gekennzeichnet, dass** die Bedienkonsole (K, K`, K") samt dem darin integrierten Frischluftsystem (35) verschiebbar, höhenverstellbar, schwenkbar und/oder rotierbar am Bedienstand (9, 17) gelagert ist.

13. Straßenbaumaschine nach einem der vorigen Ansprüche, **dadurch gekennzeichnet, dass** der Bedienstand (9, 17) ein Fahrerbedienstand (10) oder ein Außenbedienstand (18) ist.

14. Straßenbaumaschine nach einem der vorigen Ansprüche, **dadurch gekennzeichnet, dass** die Bedienkonsole (K, K`, K") vom Bedienstand (9, 17), insbesondere das Bedienpult (15, 19, 26) vom Bedienpultträger (60`, 60`), werkzeuglos abnehmbar ist.

15. Straßenbaumaschine nach einem der vorigen Ansprüche, **dadurch gekennzeichnet, dass** das Frischluftsystem (35) eine positionsabhängige, materialabhängige, bedieneranwesenheitsabhängige und/oder prozessabhängige, automatisch anpassbare Frischluftversorgungsleistung vorsieht.

16. Verwendung einer an einem offen ausgebildeten Bedienstand (9, 17) einer Straßenbaumaschine (1, 20) installierten Bedienkonsole (K, K`, K") zur Frischlufterzeugung und -versorgung.

## Geänderte Patentansprüche

### Geänderte Patentansprüche gemäss Regel 137(2) EPÜ.

1. Straßenbaumaschine (1, 20), die in Form eines Straßenfertigers (2) oder eines Beschickerfahrzeugs (21) für einen Straßenfertiger (2) vorliegt, umfassend mindestens einen Bedienstand (9, 17, 24) mit wenigstens einer offen ausgebildeten Seite (S), wobei der Bedienstand (9, 17, 24) mindestens eine Bedienkonsole (K, K`, K") zum Steuern und Überwachen von mittels der Straßenbaumaschine (1, 20) durchführbaren Prozessen sowie ein Frischluftsystem (35) mit mindestens einer Frischluftöffnung (36, 54, 61) umfasst, **dadurch gekennzeichnet, dass** das Frischluftsystem (35) vollständig in der Bedienkonsole (K, K`, K") integriert ist.

2. Straßenbaumaschine nach Anspruch 1, **dadurch gekennzeichnet, dass** die Bedienkonsole (K, K', K") ein Bedienpult (15, 19, 26) mit einer Bedienoberfläche (31) sowie einen Bedienpultträger (60) für das Bedienpult (15, 19, 26) aufweist, wobei das Frischluftsystem (35) zumindest teilweise im Bedienpult (15, 19, 26) und/oder zumindest teilweise im Bedienpultträger (60) integriert ist.

3. Straßenbaumaschine nach Anspruch 2, **dadurch gekennzeichnet, dass** eine Ansteuerung des Frischluftsystems (35) anhand mindestens einer im Bedienpult (15, 29, 26) und/oder im Bedienpultträger (60) integrierten Bedieneinheit (32) ausführbar ist.

4. Straßenbaumaschine nach Anspruch 2 oder 3, **dadurch gekennzeichnet, dass** das Bedienpult (15, 19, 26) mindestens ein Touch-Display (33) aufweist, das zur Ansteuerung des Frischluftsystems (35) konfiguriert ist.

5. Straßenbaumaschine nach einem der vorigen Ansprüche 2 bis 4, **dadurch gekennzeichnet, dass** in der Bedienoberfläche (31) und/oder in einer durch den Bedienpultträger (60) gebildeten Oberfläche wenigstens eine Frischluftöffnung (36, 54, 61) ausgebildet ist.

6. Straßenbaumaschine nach einem der vorigen Ansprüche 2 bis 5, **dadurch gekennzeichnet, dass** das Bedienpult (15, 19, 26) ein Gehäuse (41) und das Frischluftsystem (35) mindestens einen in dem Gehäuse (41) gelagerten Ventilator (43) aufweisen.

7. Straßenbaumaschine nach Anspruch 6, **dadurch gekennzeichnet, dass** das Gehäuse (41) mindestens abschnittsweise einen den Ventilator (43) mit der Frischluftöffnung (36, 61) verbindenden Luftkanal (42) ausbildet.

8. Straßenbaumaschine nach Anspruch 7, **dadurch gekennzeichnet, dass** das Frischluftsystem (35) zum Temperieren von innerhalb des Luftkanals (42) geförderter Frischluft (L) konfiguriert ist.

9. Straßenbaumaschine nach Anspruch 7 oder 8, **dadurch gekennzeichnet, dass** der Luftkanal (42) von einem schwenkbar gelagerten Teil (50) des Gehäuses (41) gebildet ist.

10. Straßenbaumaschine nach einem der vorigen Ansprüche 2 bis 9, **dadurch gekennzeichnet, dass** an einer der Bedienoberfläche (31) abgewandten Seite des Bedienpults (15, 19, 26) mindestens eine Filtereinheit (45) für das Frischluftsystem (35) vorgesehen ist.

11. Straßenbaumaschine nach einem der vorigen Ansprüche, **dadurch gekennzeichnet, dass** die Frischluftöffnung (36, 54, 61) mit mindestens einer verstellbaren Lamelle (38) ausgebildet ist.

12. Straßenbaumaschine nach einem der vorigen Ansprüche, **dadurch gekennzeichnet, dass** die Bedienkonsole (K, K`, K") samt dem darin integrierten Frischluftsystem (35) verschiebbar, höhenverstellbar, schwenkbar und/oder rotierbar am Bedienstand (9, 17) gelagert ist.

13. Straßenbaumaschine nach einem der vorigen Ansprüche, **dadurch gekennzeichnet, dass** der Bedienstand (9, 17) ein Fahrerbedienstand (10) oder ein Außenbedienstand (18) ist.

14. Straßenbaumaschine nach einem der vorigen Ansprüche, **dadurch gekennzeichnet, dass** die Bedienkonsole (K, K`, K") vom Bedienstand (9, 17), insbesondere das Bedienpult (15, 19, 26) vom Bedienpultträger (60`, 60`), werkzeuglos abnehmbar ist.

15. Straßenbaumaschine nach einem der vorigen Ansprüche, **dadurch gekennzeichnet, dass** das Frischluftsystem (35) eine positionsabhängige, materialabhängige, bedieneranwesenheitsabhängige und/oder prozessabhängige, automatisch anpassbare Frischluftversorgungsleistung vorsieht.

16. Verwendung eines Frischluftsystems (35), das in einer an einem offen ausgebildeten Bedienstand (9, 17) einer in Form eines Straßenfertigers (2) oder eines Beschickerfahrzeugs (21) für einen Straßenfertiger (2) vorliegenden Straßenbaumaschine (1, 20) installierten, zum Steuern und Überwachen von mittels der Straßenbaumaschine (1, 20) durchführbaren Prozessen ausgebildeten Bedienkonsole (K, K', K") vollständig integriert ist, zur Frischlufterzeugung und - versorgung.
